# EUROPÄISCHE PATENTSCHRIFT

(11) **EP 2 153 709 B1**
(45) Veröffentlichungstag und Bekanntmachung des Hinweises auf die Patenterteilung: **02.05.2012**
(21) Anmeldenummer: 09152201.1
(22) Anmeldetag: 05.02.2009
(51) Int. Cl.: A01B 15/10, A01B 15/08

(54) **Elastisch verformbarer Überzug als Verschleißschutz für ein Streichblech an einem Pflug und Herstellungsverfahren**
Elastically reformable covering as wear protection for a mouldboard on a plug and production method
Revêtement élastique déformable comme protection contre l'usure pour un versoir de charrue et son procédé de fabrication

(30) Priorität: 13.08.2008 DE 102008038817
(43) Veröffentlichungstag der Anmeldung: 17.02.2010
(73) Patentinhaber: Zwez, Moritz, 80637 München (DE); Haidinger, Andreas, 82396 Pähl (DE)
(72) Erfinder: Zwez, Moritz, 80637, München (DE)
(74) Vertreter: Dilg, Haeusler, Schindelmann Patentanwaltsgesellschaft mbH

(56) Entgegenhaltungen:
- EP-A- 0 450 634
- WO-A-83/00597
- DE-B- 1 142 248
- DE-U- 1 780 840
- DE-U1- 8 006 120
- GB-A- 1 161 704
- US-A- 2 624 258

## Beschreibung

### Technisches Gebiet der Erfindung:

Die Erfindung betrifft ein Streichblech für einen Pflug.

Die Erfindung betrifft ferner einen Pflug.

Die Erfindung betrifft darüber hinaus ein Verfahren zum Beschichten eines Streichblechs.

### Stand der Technik:

Ein Pflug ist ein landwirtschaftliches Gerät, das zum Umbrechen von obersten Bodenschichten eines Ackers (Pflügen) benutzt wird. Dies dient der Zerstörung der Wurzelstruktur der bis zur letzten Ernte vorhandenen Pflanzen, der Zerstörung der Wurzelstruktur von nach der Ernte ausgekeimten Unkrautsamen, der gleichmäßigen Einarbeitung von auf den Acker gebrachten organischen Materialien (zum Beispiel Gülle), der mechanischen Lockerung des Bodens (insbesondere von verdichteten Stellen), der Durchlüftung des Bodens zum Fördern biochemischer Zersetzung älteren pflanzlichen Materials zu Humus, der Vorbereitung des Ackers als Saatbett, etc.

Es ist bekannt, dass ein Pflugkopf, Pflugkörper oder auch Pflughaupt genannt, drei Teile aufweisen kann: Der so genannte Pflugschar (im folgendem Text auch mit Schar bezeichnet), auch als Pflugeisen bekannt, hat die Aufgabe, den Boden aufzuspalten und anzuheben. Zur Umwälzung, Vermischung oder Zerkleinerung des aufgespalteten Bodens dient das Streichblech, dessen furchenwandseitige Partie gegebenenfalls ein gesondert normiertes Teil, ein Streichblechvorderglied (im folgendem Text auch mit Streichblechkante bezeichnet) haben kann.

Der Verschleiß des Streichbleches ist entlang der furchenwandseitigen Kante am stärksten. Aus diesem Grund haben sich Pflüge mit zweiteiligem Streichblech, bzw. solche mit Streichblechkante, verbreitet, bei welchen das Vorderteil, d.h. das Vorderglied, auf lösbare, auswechselbare Weise mit dem Streichblech oder den Pfluggrundkörper verbunden ist.

Derartige Streichbleche werden zur Erhöhung der Lebensdauer teils aus Kunststoff gefertigt oder mit Belegen aus Keramik oder aus mehreren Schichten und Lagen bestehend aus Qualitätsstählen als Schutzschicht versehen. Zweck dieser Überzüge ist es, eine Standzeiterhöhung des Streichblechs zu erreichen. Aufgrund der Zusammensetzung von Ackerböden sind Streichbleche hohem Verschleiß unterworfen.

DE 8006120 offenbart einen Pflugkörper, der je nach Beschaffenheit des Erdbodens das Streichblech mit Verschleißblatt oder bei wenig oder gar nicht zum Kleben neigenden Böden ohne Verschleißblatt eingesetzt werden kann. Da das Verschleißblatt lediglich die Aufgabe hat, Anbackungen zu vermeiden, kann es entsprechend geringe Materialstärke aufweisen. Das eigentliche aus Stahl hergestellte Streichblech des Standardkörpers dient dabei gewissermaßen als Stützblech für dieses Verschleißblatt. Das Streichblech aus Stahl und das Verschleißblatt können mit den gleichen Schrauben befestigt sein, so dass die Montage leicht durchgeführt werden kann. Es reicht auch, lediglich die äußeren Streichblechschrauben zur Befestigung des Verschleißblattes zu verwenden. Dies hat den Vorteil, dass wenige Schrauben zu lösen sind und das Streichblech selbst nicht demontiert werden muss, seine Position beibehält und nicht neu ausgerichtet werden muss. Das Verschleißblatt ist zweckmäßig aus einem Kunststoff mit niedrigem Haftreibungskoeffizienten hergestellt, wobei eine Streichblechkante auch bei Verwendung des aus Kunststoff bestehenden Verschleißblattes aus Stahl verwendet werden kann, da in diesem Bereich aufgrund der großen Flächenpressung und des Erdflusses kein Kleben und Anbacken des Bodens möglich ist und eine Stahlblechkante einer Kunststoffschneidkante bezüglich Verschleiß überlegen ist.

Andere herkömmliche Vorrichtungen sind aus DD 202486, DE 19833122, DE 8006120 und DE 10324239 bekannt.

Die oben benannten technischen Lösungen weisen durch ihre verhältnismäßig hohen Kosten zu den relativ niedrigen Standzeiten der Streichbleche, von nur 2-4 Jahren, einen gemeinsamen Mangel auf. Nach dieser Zeitspanne ist ein Komplettaustausch des Streichbleches unumgänglich. Der Herstellungsprozess der momentan bekannten Lösungen ist kompliziert und teuer, da sie der Verwendung von besten Qualitätsstählen bedürfen.

### Kurzbeschreibung der Erfindung:

Dieser Erfindung liegt die Aufgabe zugrunde, Streichbleche sicher gegen Verschleiß zu schützen und gleichzeitig die Wirtschaftlichkeit eines Pfluges zu verbessern.

Diese Aufgabe wird durch ein Streichblech, durch einen Pflug und durch ein Verfahren zum Beschichten eines Streichblechs mit den Merkmalen gemäß den unabhängigen Patentansprüchen gelöst.

Gemäß einem exemplarischen Ausführungsbeispiel der Erfindung ist ein Streichblech für einen Pflugkörper geschaffen, wobei das Streichblech ein Streichblechgrundmaterial und eine Verschleißschutzschicht aufweist, die zumindest einen Teil einer Oberfläche des Streichblechgrundmaterials bedeckt und ein gummielastisches Material als elastisch verformbares Material aufweist.

Gemäß einem anderen exemplarischen Ausführungsbeispiel der Erfindung ist ein Pflugkörper geschaffen, der ein Streichblech mit den oben beschriebenen Merkmalen aufweist.

Gemäß noch einem anderen exemplarischen Ausführungsbeispiel der Erfindung ist ein Verfahren zum Beschichten (insbesondere zum erstmaligen Beschichten oder zum Wiederbeschichten, letzteres zum Beispiel zum Erneuern einer verschlissenen vorherigen Schicht) eines Streichblechs für einen Pflugkörper geschaffen, wobei bei dem Verfahren ein Streichblechgrundmaterial bereitgestellt wird und auf dem Streichblechgrundmaterial mittels Beschichtens zumindest eines Teils einer Oberfläche des Streichblechgrundmaterials mit einem elastisch verformbaren Material eine Verschleißschutzschicht gebildet wird.

Der Begriff "elastisch verformbares Material" bezeichnet insbesondere ein Material, das bei äußerer Krafteinwirkung eine funktionell nicht unerhebliche Formveränderung erfährt, die sich bei Nachlassen der äußeren Kraft zurückbildet, so dass das elastisch verformbare Material dann wieder in die ursprüngliche Form zurückgeht. Zum Beispiel kann während einer Einwirkung von beim Pflügen üblicherweise auftretenden Kräften auf die Verschleißschutzschicht des Streichblechs die Verschleißschutzschicht eine optisch wahrnehmbare Verformung erfahren. Bei Kräften solcher Dimensionen kann das elastisch verformbare Material von einer plastischen Deformation oder einer spanenden Deformation frei oder weitestgehend frei sein. Der Elastizitätsmodul, der den Zusammenhang zwischen Spannung und Dehnung bei der Verformung eines festen Körpers bei linear elastischem Verhalten beschreibt, kann bei dem elastisch verformbaren Material zum Beispiel kleiner als 1 kN/mm², insbesondere kleiner als 0.5 kN/mm², weiter insbesondere kleiner als 0.1 kN/mm²sein. Zum Beispiel kann der Elastizitätsmodul bei dem elastisch verformbaren Material (zum Beispiel Gummi, Elastomere) zwischen 0.01 kN/mm² und 0.1 kN/mm² liegen. Diese Werte des Elastizitätsmoduls können sich auf eine Temperatur von 20°C beziehen. "Elastisch verformbares Material" kann insbesondere Material mit einer Härte nach ISO 868-2003 (DIN 53505) von 20 bis 110 Shore A, insbesondere von 30 bis 90 Shore A, weiter insbesondere von 40 bis 70 Shore A, bezeichnen. Zum Beispiel kann das elastisch verformbare Material eine Shore-Härte in einem Bereich zwischen 90±5 Shore A bis 30±5 Shore A aufweisen. Bei zu geringen Shore-Härten kann das Material zu weich werden, was bei sehr kleinem Gestein zu einem unerwünscht hohen Abrieb führen kann. Bei zu großen Shore-Härten kann ausreichende Elastizität fehlen, was zu einer zu hohen Festigkeit und bei bestimmten Böden zu einem unerwünscht hohen Abrieb führen kann. Elastisch verformbares Material kann einen Abriebfaktor nach DIN ISO 4649-2006 von 140 mm³ bis 50mm³ aufweisen. Elastisch verformbares Material kann eine Rückprallelastizität nach ISO 4462-1986 (DIN53512) von 78% bis 30 % aufweisen. Alle diese Werte können nach oben wie nach unten variieren.

Der Begriff "Gummi" bezeichnet insbesondere ein kautschukhaltiges Material. Natürlicher Gummi kann aus einem kautschukähnlichen Pflanzensaft gewonnen werden, der beim Eintrocknen durch Polymerisation zu elastischen Feststoffen verhärtet. Gummis können einen wasserlöslichen Anteil und Gummiharze (Latex) enthalten und können als vulkanisierter Kautschuk bezeichnet werden. Pflanzlicher Kautschuk, der auch Basis für Gummi sein kann, wird auch Naturkautschuk genannt. Kautschuk (und somit Gummi) können aber auch synthetisch hergestellt werden. Synthetischer Kautschuk kann Styrol, Isopren und/oder Butadien enthalten, andere Rohstoffbasen sind Styrolacrylat, Reinacrylat, Vinylacetat. Beispiele für synthetischen Kautschuk sind Styrol-Butadien-Kautschuk, Ethylen-, Propylen-, Dien-Kautschuk und Nitril-Butadien-Kautschuk und Neopren. Kautschuk kann lange Polyisopren-Ketten enthalten, welche durch Zusatz von Schwefel unter Druck und Hitze vernetzt werden können, wodurch ein elastisches Material entsteht. Dieser Prozess kann Vulkanisierung genannt werden. Weitere Beispiele für geeignete Kautschuke sind NR, IR, IIR, NBR, HNBR, CR, ACM, CSM, AEM, SBR und EPDM.

Ausführungsbeispiele der Erfindung schaffen anschaulich ein Streichblech für einen Pflug mit Verschleißschutz und Korrosionsschutz aus einem elastisch verformbaren Material wie Gummi. Die mit Ausführungsbeispielen der Erfindung erzielbaren Vorteile bestehen insbesondere darin, dass die Standzeiten der Streichbleche entscheidend erhöht werden, wodurch sich die regelmäßigen, zeitraubenden und teuren Komplett-Austauscharbeiten verringern oder entfallen. Ein großer Vorteil ist darin zu sehen, dass selbst nach Verbrauch der Verschleißschutzschicht keine komplette Neubeschaffung des Streichbleches erforderlich ist, sondern eine wesentlich preiswertere Verschleißschutz-Neubeschichtung möglich ist. Auch dadurch wird die Wirtschaftlichkeit eines Pfluges entscheidend erhöht. Ferner kann gerade die Flexibilität und nur mäßige Härte der Verschleißschutzschicht dazu beitragen, dass Abrieb und Verschleiß der Verschleißschutzschicht sehr gering sind.

Mängel der herkömmlichen Streichbleche beseitigen Ausführungsbeispiele der Erfindung, indem die Streichbleche einen teilseitigen oder allseitigen Schutz aus verschleißfestem Material aus einem elastisch verformbaren Material wie Gummi erhalten. Hierbei bleibt das Streichblech in seiner bisher bekannten Form aus dem Stand der Technik bloß als Trägermaterial erhalten, und wird vorteilhaft mit der verschleißfesten Gummierung oder einem anderen elastisch verformbaren Überzug überzogen.

Ein Ausführungsbeispiel der Erfindung schafft es, ein mit Verschleißschutz versehenes Streichblech bereitzustellen und zur Anwendung zu bringen. Mittels dieses Verschleißschutzes können die Standzeiten des Streichbleches erheblich erhöht werden, wodurch die Betriebskosten eines Pfluges gesenkt werden und dessen Wirtschaftlichkeit erheblich verbessert wird.

Im Folgenden werden weitere Ausführungsbeispiele des Streichblechs beschrieben. Diese Ausgestaltungen gelten auch für den Pflug und für das Verfahren zum Beschichten eines Streichblechs.

Es kann ein Pflugkörper mit hoher Standzeit bereitgestellt werden, bei dem das Streichblech mit einem verschleißfesten Gummi beschichtet ist. Der Streichblechgrundkörper kann aus ein- oder mehrlagigem Stahl bestehen. Andere Materialien für den Streichblechgrundkörper sind möglich, zum Beispiel aus Metall (zum Beispiel Eisen oder Aluminium) oder Kunststoff. Die Verschleißschutzschicht kann aus reibfestem und verschleißfestem Gummi bestehen, der dauerhaft und fest mit dem Streichblechgrundkörper, zum Beispiel mittels Klebens oder Sprühens, verbunden ist.

Eine Stärke der Gummierung kann an die Erfordernisse hinsichtlich des Verschleißes angepasst werden. Die Verschleißschutzschicht kann zum Beispiel eine Dicke zwischen 2 mm und 20 mm aufweisen, insbesondere eine Dicke zwischen 5 mm und 11 mm aufweisen, weiter insbesondere eine Dicke zwischen 7 mm und 9 mm aufweisen. Beispielsweise kann die Verschleißschutzschicht eine Gummimatte einer Dicke von 8 mm sein. Mit solchen Dicken kann sowohl ein ausreichend langer Betrieb des Streichblechs zwischen zwei Erneuerungsprozeduren sichergestellt werden, als auch eine mechanisch robuste Konfiguration der Verschleißschutzschicht ermöglicht werden, ohne aber gleichzeitig die Gesamtdicke des Streichblechs unerwünscht stark zu erhöhen. Die Dicke kann konstant (homogen) über die gesamte bedeckte Oberfläche hin sein oder kann variabel (inhomogen) über die bedeckte Oberfläche hin sein, wobei in letzterem Fall ein (während des Pflügens) mechanisch stärker beanspruchter Oberflächenabschnitt mit einer dickeren Verschleißschutzschicht versehen sein kann als ein (während des Pflügens) mechanisch weniger stark beanspruchter Oberflächenabschnitt.

Eine Streichblechkante sowie eine Schar können- insbesondere wenn diese nicht mit einer Verschleißschutzschicht versehen sind - mittels einer oder mehrerer Scheiben oder einem ähnlichen Mittel so unterlegt sein, dass keine Stufe zwischen Streichblechkante sowie Schar und dem Streichblech mit Verschleißschutz verbleibt, um somit eine gewünschte plane und durchgehende Arbeitsfläche zu gewährleisten.

Es ist auch möglich, dass an einem Pfluggrundkörper, an dem Komponenten eines Streichblechs montiert werden können, eine mechanische Stufe gebildet wird, welche den Einsatz von Unterlegscheiben entbehrlich macht.

Das Streichblech mit Verschleißschutzschicht kann auf der Rückseite des Streichblechs je nach gewählten Auftragsverfahren einen oder mehrere Einführungsschlitze aufweisen. Diese können zum Beispiel durch ein Sprühverfahren jedoch entfallen.

Die Verschleißschutzschicht kann mittels eines Klebers fest mit dem Streichblechgrundmaterial verbunden sein. Eine Möglichkeit der Verbindung der verschleißfesten Gummierung mit dem Trägermaterial erfolgt (zum Beispiel allseitig) mittels einer Kaltvulkanisation durch eine Klebeverbindung mittels eines Klebers, der auf die Streichblech-Außenseite und/oder auf die Innenseite des Verschleißschutzes aufgetragen wird, wobei die Oberfläche des Streichbleches zuvor metallisch blank gesandstrahlt werden kann und die entsprechend schon dimensionierte und vulkanisierte Gummierung damit kalt aufgeklebt werden kann.

Eine andere Möglichkeit besteht darin, mittels einer Heißvulkanisation das noch unvulkanisierte Verschleißschutzmaterial auf das mit einem Kleber bzw. Bindemittel bestrichene Streichblech aufzuziehen und anschließend unter Überdruck und erhöhter Temperatur in einem Autoklaven oder in einer Presse (d.h. unter Druck) zu vulkanisieren, was eine feste Verbindung der beiden Komponenten zur Folge hat.

Eine weitere Möglichkeit ist, die Verschleißschutzschicht mittels eines Sprühverfahrens (zum Beispiel in flüssiger Form) aufzutragen.

Jede der hier beschriebenen Verbindungsarten des Verschleißschutzmaterials mit dem Streichblech gewährleistet selbst bei größter Beanspruchung durch Reibung, Schlag oder Stoß das Ausbleiben einer unerwünschten Ablösung des Verschleißschutzes von dem Trägermaterial.

Der Verschleißschutz kann zum Beispiel aus Elastomeren, Kautschukmischungen oder verschleißfestem Gummi bestehen. Das elastisch verformbare Material kann Gummi (zum Beispiel natürlichen und/oder synthetischen Gummi), ein Elastomer und/oder eine Kautschukmischung aufweisen. All diese Materialien haben die Fähigkeit, bei ausreichender elastischer Verformbarkeit auch eine ausreichend gute (wenn auch nicht zu große) Härte und einen sehr geringen Preis zu haben. Somit eignen sich diese Materialien besonders gut zur Beschichtung eines Streichblechs und haben andererseits die erforderlichen Materialeigenschaften, auf einem Stahlblechgrundmaterial wie zum Beispiel Stahl aufbringbar zu sein. Beispiele für geeignete Beschichtungsmaterialien (die je nach Bodenbeschaffenheit und Anforderungen aus einer breiten Palette unterschiedlicher Materialien ausgewählt werden können) sind Remaline 25/CN, Remaline 25/EP160/CN gewebeverstärkt, Remaline 35/CN, Remaline 35/EP160/CN gewebeverstärkt, Remaline 40 ORANGE/CN, Remaline MP 40/CN, Remaline 40/CN, Remaline 40 ÖL/CN, Remaline 40 S/CN, Remaline 40 HR/EP160/CN, Remaline 40 WEISS LEB/CN, Remaline 50/CN, Remaline 60/CN, Remaline 60/EP160/CN, Remaline MP 60/CN, Remaline 70/CN, Remaline 70/EP160/CN, Remaline 70 ÖL/CN, Remaline 70 ÖL/EP160/CN, Remaline 70V/CN, Remaline 70S/CN, Remaline 70HR/CN, Remaline 70 WEISS LEB/CN, Remaline 70 WEISS ÖL LEB/CN und/oder Remaline 90/CN.

Das Streichblechgrundmaterial kann Stahl aufweisen oder daraus bestehen. Insbesondere kann das Stahlblechgrundmaterial eine oder mehrere Lagen aufweisen. Das Streichblechgrundmaterial kann grundsätzlich aus verschiedenen metallischen und/oder nicht-metallischen Materialien hergestellt werden, zum Beispiel auch aus Kunststoff, wobei Stahl aufgrund seiner hohen Härte und seines vertretbaren Preises bevorzugt ist. Beispiele für geeignete Stahlmaterialien sind aufgekohlter Stahl, durchgehärteter Spezialstahl, durchgehärteter vergüteter Feinkornstahl, Drei-Lagen-Stahl (Triplex-Streichbleche), etc.

Die Verschleißschutzschicht kann Durchführungen für Befestigungsschrauben aufweisen und im Bereich der Befestigungsschrauben so ausgespart sein, dass die Befestigungsschrauben zusammen mit der Verschleißschutzschicht eine ebene und plane Arbeitsfläche bilden. Ein Streichblech wird als Verschleißteil üblicherweise mit anderen Komponenten eines Pfluges verbunden, da es zum Beispiel mit Schar und Schneide zusammenwirkt und zum Pflügen an einem Pflug befestigt wird. Zwecks Befestigung könne Befestigungsschrauben eingesetzt werden, die teilweise auch durch das Streichblechgrundmaterial hindurchgeführt werden. Zum Durchstecken der Befestigungsschrauben oder anderer Befestigungsmittel wie zum Beispiel Nieten kann auch die Verschleißschutzschicht Aussparungen in Form von Löchern oder dergleichen aufweisen, um ein Hindurchführen der Befestigungsschrauben zu ermöglichen. Gleichzeitig können die Befestigungsschrauben so weit eingeschraubt werden, dass sie gemeinsam mit der äußeren Oberfläche der Verschleißschutzschicht abschließen und somit eine im Wesentlichen ebene Arbeitsfläche bilden, die während des Pflügens wenig anfällig für Abrieb und Verschleiß ist.

Die Verschleißschutzschicht kann mittels eines Klebers fest mit dem Streichblechgrundmaterial verbunden sein. Insbesondere ein gummiartiges Material ist hervorragend mit dem darunter liegenden Streichblechgrundmaterial (beispielsweise aus Stahl) verklebbar und nach Verkleben vor einem Ablösen während des Pflugvorgangs sicher geschützt.

Auf einer Rückseite des Streichblechs können ein oder mehrere Einführungsschlitze vorhanden sein. Insbesondere können auf eine Rückseite des Streichblechs, das heißt auf einer Oberfläche des Streichblechs die von einer Beschichtung mit dem elastisch verformbaren Verschleißschutzmaterial frei ist, ein oder mehrere Einführungsschlitze gebildet sein, die ebenfalls zum Befestigen des Streichblechs an anderen Komponenten dienen können. Diesbezüglich kann zum Beispiel die Montagetechnik Dura Maxx der Firma Lemken eingesetzt werden, hier entfallen dann die Schraubenlöcher im Streichblech.

Es sind verschiedene Konfigurationen hinsichtlich der Bedeckung einer Oberfläche des Streichblechgrundmaterials mit der Verschleißschutzschicht möglich.

Gemäß einem Ausführungsbeispiel kann die gesamte Oberfläche des Streichblechgrundmaterials mit der Verschleißschutzschicht bedeckt werden. Ein solches Ausführungsbeispiel kann zum Beispiel vorteilhaft sein, wenn das Streichblechgrundmaterial allumseitig mit Gummi besprüht wird. Es ist auch möglich, dass eine vorgefertigte Gummimatte allseitig um das gesamte Streichblech herum gelegt wird und daran zum Beispiel mittels Klebens befestigt wird.

Alternativ kann eine der beiden Hauptflächen (insbesondere die furchenwandseitige Fläche) des Streichblechgrundmaterials vollständig oder teilweise mit der Verschleißschutzschicht bedeckt sein und die andere der Hauptflächen (insbesondere die der Furchenwand abgewandte Fläche) des Streichblechgrundmaterials von der Verschleißschutzschicht vollständig frei sein. Die Oberfläche des Streichblechs kann zwei Hauptoberflächen (d.h. die beiden flächengrößten Flächen des Streichblechs) enthalten, die sich bei Bewegung des Streichblechs während des Pflügens im Wesentlichen mit ihrem Normalenvektor senkrecht zur Bewegungsrichtung der Pflugmaschine relativ zum Acker befinden. Von diesen beiden Hauptflächen kann zum Beispiel nur eine mit der Verschleißschutzschicht bedeckt sein, was eine materialsparende und somit kostengünstige Konfiguration darstellt. Die bedeckte der beiden Hauptoberflächen kann diejenige sein, die während des Pflügens der höheren mechanischen Belastung ausgesetzt ist.

Es ist auch möglich, dass eine der Hauptflächen des Streichblechgrundmaterials mit der Verschleißschutzschicht vollständig oder teilweise bedeckt ist, die andere der Hauptflächen des Streichblechgrundmaterials von der Verschleißschutzschicht vollständig frei ist und eine oder mehrere der Schmalseiten (d.h. derjenigen Oberfläche, die unterschiedlich von den beiden Hauptoberflächen sind) des Streichblechgrundmaterials mit der Verschleißschutzschicht vollständig oder teilweise bedeckt ist. Als Schmalseite kann der Oberflächenbereich eines Streichblechs bezeichnet werden, der sich ringförmig entlang des Streichblechs erstreckt, wobei der Ring die beiden Hauptoberflächen des Streichblechs umfänglich einschließt. Auch ein Teil dieser Schmalseiten oder die gesamten Schmalseiten kann oder können von der Verschleißschutzschicht bedeckt sein, was zum Beispiel mittels Umklappens eines Gummilappens ausgehend von einer bedeckten Hauptoberfläche erreicht werden kann.

Gemäß noch einem anderen Ausführungsbeispiel kann wiederum eine der Hauptflächen des Streichblechgrundmaterials mit der Verschleißschutzschicht vollständig oder teilweise bedeckt sein, ein Teil der anderen der Hauptflächen des Streichblechgrundmaterials von der Verschleißschutzschicht frei sein und eine oder mehrere der Schmalseiten des Streichblechgrundmaterials mit der Verschleißschutzschicht bedeckt sein, wobei sich diese Schmalseitenbedeckung bis in die teilweise unbedeckte Hauptfläche hineinerstrecken kann. Somit kann ein (zum Beispiel vollumfänglicher) Randbereich der anderen Hauptfläche auch mit der Verschleißschutzschicht bedeckt sein, zum Beispiel mittels Umklappens der Verschleißschutzschicht von einer Hauptfläche über die Schmalseite hinweg hineinerstreckend bis in die gegenüberliegende Hauptfläche hinein. Ein solches Umlegen der Verschleißschutzschicht kann ein besonders sicheres Verbleiben der Verschleißschutzschicht an dem Streichblechgrundmaterial sicherstellen, selbst bei hohen Beanspruchungen und harten Böden.

In einem Ausführungsbeispiel kann das Streichblechgrundmaterial eine einzige durchgehende bzw. zusammenhängende Schicht sein, so dass dann von einem geschlossenen Streichblechkörper gesprochen werden kann. Ein geschlossener Streichblechkörper hat den Vorteil, dass er im Wesentlichen auf jeder Art von Boden robust eingesetzt werden kann. Auch sind die Anschaffungskosten niedrig und die Einsatzgebiete breit gefächert.

Alternativ kann das Streichblechgrundmaterial eine Mehrzahl von getrennten Streifen aufweisen, die voneinander mittels Zwischenräumen beabstandet sein können. Diese Zwischenräume können mittels separat vorgesehener Verbindungsstege verbunden sein. Solch eine Anordnung kann als offenes Streichblech bezeichnet werden. Ein offenes Streichblech oder ein Streifenkörper kann eine besonders feinere Krümelung des Erdreichs ermöglichen und kann auf bestimmten Arten von Böden im Einsatz besonders wirtschaftlich sein. Bei Erreichen der Verschleißgrenze kann es ausreichend sein, nur einen verschlissenen Streifen auszutauschen und andere Streifen am Pflug zu belassen. Somit kann bei Verschleiß der Verschleißschutzschicht aus dem elastisch verformbaren Material lediglich ein individuell verschlissener Streifen erneuert werden, wohingegen noch nicht verschlissene Streifen unverändert am Streichblatt verbleiben können.

Sogenannte Universalkörper, die ebenfalls erfindungsgemäß beschichtet werden können, können auf jeder Art von Boden zum Einsatz kommen und haben gute Krümelungseigenschaften bei guter Leichtzügigkeit und einer Einsetzbarkeit auf nahezu allen Böden.

Das Streichblechgrundmaterial kann an einer Hauptoberfläche, welche einer mit der Verschleißschutzschicht bedeckten anderen Hauptoberfläche des Streichblechgrundmaterials gegenüberliegt, eine Befestigungsstruktur zum Befestigen des Streichblechs an einem Pfluggrundkörper aufweisen. Bei einem solchen Ausführungsbeispiel kann das Vorsehen von Aussparungen in Streichblechgrundmaterial bzw. Verschleißschutzschicht entbehrlich sein, da eine Befestigung rückseitig erfolgen kann. Dies erleichtert auch das Aufbringen der Verschleißschutzschicht auf dem Streichblechgrundmaterial.

Im Folgenden werden weitere Ausführungsbeispiele des Pflugs beschrieben. Diese Ausgestaltungen gelten auch für das Streichblech und für das Verfahren zum Beschichten eines Streichblechs.

Mit einem erfindungsgemäßen Ackerpflug kann ein bereits abgeerntetes Feld umgepflügt werden, um damit übriggebliebene Ernterückstände in dem Boden wieder einzuarbeiten und dadurch deren Zersetzung zu beschleunigen, zum anderen die Vermehrung von Pilzen, Unkraut und Ungeziefer durch die Umpflügung zu hemmen. Auch kann der Boden für eine nachfolgende Bestellung aufgelockert werden, da dadurch das Saatgut zuverlässig in dem Boden eingebracht werden kann. Ein Ackerpflug kann eine Mehrzahl (zum Beispiel 3 bis 8, manchmal sogar 12) von Pflugkörpern aufweisen, die wechselseitig auf Ober- und Unterseite des Pfluges angebracht sein können und je nach Fahrtrichtung gedreht werden können (zum Beispiel hydraulisch). Ein erfindungsgemäßer Pflugkörper eines Ackerpfluges kann eine Pflugschar, ein Streichblech und eine Schneide (auch Streichblechvorderteil genannt) aufweisen. Optional kann erfindungsgemäß auch mindestens ein Anbauteil verwendet werden, zum Beispiel eine Streichschiene, ein Turboeinlegestreichblech und/oder eine Anlage. Die Schar bzw. Scharspitze gleitet über den Erdboden und trägt damit die Erde ab. Sie erzeugt dabei eine sogenannte Pflugsohle, eine Art horizontalen Schnitt. Die Schneide- oder Streichblechvorderkante kann die tatsächliche Einschneidearbeit in das Erdreich verrichten, und somit den Boden in vertikaler Lage trennen. Das Streichblech dient zum Beispiel durch eine Wölbung dem Abführen und Umwerfen der von Schar und Schneidkante aufgeschnitten Erdmasse, wobei bei diesem Prozess der Boden um einen hohen Winkelbereich (zum Beispiel 120°) gewendet und aufgelockert werden kann. Folglich kann das Streichblech hohe Belastungen erfahren, was zu einer hohen Verschleißgefahr führt. Zwar ist das Streichblech geschützt durch Schneide- und Schar kaum Kantenbelastungen ausgesetzt, allerdings treten häufig Belastungen im Mittelbereich auf. Ausführungsbeispielen der Erfindung liegt die Erkenntnis zugrunde, dass selektiv der vordere Mittelbereich der Hauptarbeitsoberfläche des Streichblechs einer starken Belastung ausgesetzt ist, wohingegen die Rückfläche sowie der Kantenbereich nur eine geringe Beanspruchung erfahren. Erfindungsgemäß ist es daher im Sinne einer kosteneffizienten Bereitstellung des Streichblechs ausreichend, nur einen Teil der Fläche des Streichblechs mit dem elastisch verformbaren Schutzmaterial zu versehen, insbesondere dort, wo die hohen Belastungen auftreten. Es ist auch möglich, selektiv in diesem Bereich die Dicke der Verschleißschutzschicht gegenüber anderen Bereichen des Streichblechs lokal zu erhöhen.

Bei dem erfindungsgemäßen Pflugkörper können Streichblechkante und Schar mittels Scheiben (insbesondere Unterlegscheiben) oder alternativ mittels maßangefertigten bzw. passend dimensionierten Metallunterlegstreifen so unterlegt werden, dass ein Übergang zwischen Streichblechkante sowie Schar einerseits und dem Streichblech mit Verschleißschutzschicht andererseits kantenfrei verbleibt, um somit eine plane und durchgehende Arbeitsfläche zu gewährleisten. Durch das gezielte Einsetzen von Unterlegscheiben oder anderen Materialien oder Bauteilen können Dickenunterschiede zwischen unterschiedlichen Komponenten des Pflugkörpers ausgeglichen werden, die aus der Beschichtung nur eines Teils dieser Komponenten (insbesondere nur des Streichblechs) mit der Verschleißschutzschicht resultieren können. Unterlegscheiben sind kostengünstig und leicht montierbar, so dass die beschriebene Maßnahme bei geringstem Aufwand großen Nutzen bewerkstelligt. Die Dicke der Scheiben kann zum Beispiel im Wesentlichen einer Dicke der Verschleißschutzschicht entsprechen.

Streichblechkante und Schar können von der Verschleißschutzschicht vollständig frei sein. Somit kann gemäß diesem Ausführungsbeispiel die Verschleißschutzschicht nur auf dem Streichblech vorgesehen sein, wohingegen alle anderen Teile des Pflugkörpers von der Verschleißschutzschicht frei sein können. Dies ermöglicht eine besonders wartungsarme und kosteneffiziente Betriebsweise des Pflugkörpers, der nur an unbedingt erforderlichen Stellen mit der Verschleißschutzschicht geschützt sein muss. Gemäß einem anderen Ausführungsbeispiel kann oder können auch Streichblechkante und/oder Schar vollständig oder teilweise mit der Verschleißschutzschicht versehen sein.

Im Folgenden werden weitere Ausführungsbeispiele des Verfahrens zum Beschichten eines Streichblechs beschrieben. Diese Ausgestaltungen gelten auch für den Pflug und für das Streichblech.

Ein Verfahren zur Herstellung bzw. zum Erneuern eines Streichbleches mit Verschleißschutzschicht mit den oben beschriebenen Merkmalen kann dadurch gekennzeichnet sein, dass die Verbindung der zuvor erzeugten Gummi-Verschleißschutzschicht allseitig durch eine Klebeverbindung erfolgt. Hierbei wird mittels eines 2-Komponenten-Spezialklebers (bzw. eines Bindemittels), der sowohl auf die Streichblech-Außenseite als auch auf die Innenseite des Verschleißschutzes aufgetragen werden kann, die entsprechend schon dimensionierte und vulkanisierte Gummierung kalt aufgeklebt. Optional kann unter Vakuum oder Unterdruck verklebt werden. Die Oberfläche des Streichbleches kann zuvor metallisch blank gesandstrahlt werden. Bei dem Verfahren kann somit die Verbindung einer zuvor erzeugten, dimensionierten und vulkanisierten Verschleißschutzschicht durch eine kalte Klebeverbindung mit dem Streichblechgrundmaterial erfolgen. Bei diesem Ausführungsbeispiel kann die Verschleißschutzschicht, insbesondere aus Gummi, fertig zugeschnitten und bereits vulkanisiert sein, so dass sie als Matte auf das Streichblechgrundmaterial aufklebbar sein kann. Die vorgefertigte Matte kann in Form von Meterware auf die Dimension des Streichblechgrundmaterials zugeschnitten werden und dann mittels eines Stahl-Gummiklebers verklebt werden. Für das Verkleben eines Gummis kann vorteilhaft ein elastischer Kleber eingesetzt werden. Zum Beispiel kann ein 2-Komponenten-Kleber der Firma Rema Tip Top Cement SC 4000 mit Härter E 40, Cement SC 2000 mit Härter UT-R20, Cement BC 3004 mit Härter E40 oder Cement BC 3000 mit Härter UT-R20verwendet werden.

Ein anderes Ausführungsbeispiel des Verfahrens der Heißvulkanisation zur Herstellung bzw. zum Erneuern eines Streichbleches mit Verschleißschutzschicht mit den oben beschriebenen Merkmalen kann dadurch gekennzeichnet sein, dass das noch unvulkanisierte Verschleißschutzmaterial auf das optional mit einem Ein-Komponenten Spezialkleber/Bindemittel bestrichene metallische Streichblechgrundmaterial aufgezogen und anschließend vulkanisiert wird. Somit kann bei dem Verfahren auch noch unvulkanisiertes Verschleißschutzmaterial auf das mit einem Kleber bestrichene Streichblechgrundmaterial aufgezogen und anschließend vulkanisiert werden. Somit kann das Gummimaterial oder anderes elastisch verformbares Material auf das Stahlmaterial aufgebracht werden. Nachfolgend kann ein Vulkanisationsschritt durchgeführt werden, was eine innige Verbindung zwischen Gummiverschleißschutzmaterialschicht und der darunter liegenden Streichblechgrundmaterialschicht ermöglicht.

Für das Verkleben eines Gummis kann vorteilhaft ein Bindemittel eingesetzt werden: Basis eines solchen Bindemittels kann eine Mischung von halogenierten Polymeren wie beispielsweise Chlorkautschuk und von Vernetzern sein. Zusätzlich können Füllstoffe vorhanden sein. Der Verbund des Gummis mit dem Bindemittel wird verbessert, wenn das Bindemittel zusätzlich nitroso-substituierte Aromaten enthält. Ein Beispiel hierfür ist p-Dinitrosobenzol Chemosil 220 (Heizlösung), Chemlok®, MegumTM. Die Vulkanisationstemperatur liegt zwischen 90 und 220 °C, vorzugsweise zwischen 150 und 180 °C. Die Vulkanisationszeit richtet sich nach der Vulkanisationsgeschwindigkeit, der Kautschukmischung und der Größe der Teile.

Somit kann eine Kaltvulkanisierung durchgeführt werden, bei der bereits vollständig vulkanisiertes Gummimaterial auf Streichblechgrundmaterial kalt aufgeklebt wird. Alternativ kann eine Heißvulkanisierung durchgeführt werden, bei der vollständig unvulkanisiertes Rohmaterial auf Streichblechgrundmaterial aufgeklebt und dann unter Hitze vulkanisiert wird. Eine weitere Variante ist eine Warmvulkanisierung, bei der teilweise vorvulkanisiertes Gummimaterial auf Streichblechgrundmaterial aufgebracht wird und unter Wärme zum vollständigen Vulkanisieren gebracht wird.

Noch ein anderes Verfahren zur Herstellung bzw. zum Erneuern eines Streichbleches mit Verschleißschutzschicht mit den oben beschriebenen Merkmalen kann dadurch gekennzeichnet sein, dass das Verschleißschutzmaterial mittels eines Sprühverfahren aufgetragen wird. Auf eine Kleberschicht kann dann auch verzichtet werden, zum Beispiel kann in diesen Fällen die Verschleißschutzschicht selbst haftend sein. Das Verschleißschutzmaterial kann daher mittels eines Sprühverfahrens auf das Streichblechgrundmaterial aufgetragen werden. Ein Sprühverfahren ermöglicht wiederum eine feste Verbindung zwischen Streichblechgrundmaterial und dem Verschleißschutzmaterial und erlaubt eine einfache Verfahrensführung, womit weitere Kostenvorteile erreicht werden können.

Als weitere Alternative kann das Verschleißschutzmaterial mittels eines Tauchverfahrens auf das Streichblechgrundmaterial aufgebracht werden. Hierbei kann das Streichblechgrundmaterial in ein flüssiges Tauchbad aus Gummi eingetaucht werden. Optional kann vor einem solchen Eintauchen auf dem Streichblechgrundmaterial ein Primer aufgebracht werden. Das Gummimaterial wird sich dann bevorzugt oder ausschließlich auf Stellen des Streichblechgrundmaterials ablagern, auf dem der Primer aufgebracht worden ist. Zum Beispiel kann solch ein Primer selektiv auf solchen Abschnitten des Streichblechgrundmaterials aufgebracht werden, auf denen während des Pflügens die größte Belastung einwirkt.

Die Oberfläche des Streichblechgrundmaterials kann vor dem Aufkleben des Gummis gesandstrahlt werden. Eine dadurch entstehende raue Oberfläche bietet einer Primergrundierung (wie zum Beispiel die Primer der Firma Rema Tip Top PR200, PR304 oder PR300) so eine sehr gute Angriffsfläche, was einen guten Halt und eine dauerhafte Verbindung mit einem Stahlträgermaterial sicherstellt. Primer können Dispersionen von organischen Polymeren in organischen Lösungsmitteln sein. Verwendbar sind beispielsweise Phenolharze, Chlorkautschuk und Epoxidharze, die auch in Kombination miteinander eingesetzt werden können. Vorzugsweise können Phenolharze wahlweise mit Chlorkautschuk oder mit Epoxidharzen kombiniert werden. Zusätzlich können die Primer als Additive Metalloxide und/oder Füllstoffe enthalten. Anstelle von Dispersionen in organischen Lösungsmitteln können auch wäßrige Primer-Dispersionen eingesetzt werden, zum Beispiel Chemosil 211 Primer/Haftvermittter. Auf die Grundierung kann anschließend ein geeigneter Kleber/ein geeignetes Bindemittel aufgebracht werden, welcher/s die Verbindung zwischen Verschleißschutzschicht und Grundierung herstellt. Vor dem Bilden der Verschleißschutzschicht kann somit eine Oberfläche des Streichblechgrundmaterials mittels Sandstrahlens behandelt werden.

Vor dem Bilden der Verschleißschutzschicht können in dem Streichblechgrundmaterial Befestigungsschrauben durch Schraubenlöcher hindurchgeführt werden. Somit kann eine Befestigungsstruktur vor dem Ausbilden einer Verschleißschutzschicht ausgebildet werden, was ein planes und unterbrechungsfreies Aufbringen der Verschleißschutzschicht ermöglicht. Dadurch kann die Widerstandsfähigkeit der Verschleißschutzschicht gegenüber Kräften beim Pflügen weiter verbessert werden.

Alternativ können erst nach dem Bilden der Verschleißschutzschicht auf dem Streichblechgrundmaterial Schraubenlöcher gebildet werden, die dann die Verschleißschutzschicht und das Streichblechgrundmaterial durchdringen können. Befestigungsschrauben können dann durch die Schraubenlöcher hindurchgeführt werden, und es können Stöpsel aus dem elastisch verformbaren Material zum Bedecken der Befestigungsschrauben auf die Schraubenlöcher aufgesetzt werden. Mit anderen Worten kann zunächst die Verschleißschutzschicht auf dem Streichblechgrundmaterial aufgebracht werden und es können nachfolgend zum Beispiel mittels Fräsens Löcher für Befestigungsschrauben in die Verschleißschutzschicht eingebracht werden. Dann können Schrauben oder andere Befestigungselemente wie zum Beispiel Nieten hindurchgeführt werden, wobei ein Durchführen der Nieten oder Schrauben durch diese Schraubenlöcher ein Sackloch in dem Streichblech hinterlassen kann, dessen Bodenfläche von einem Schraubenkopf und dessen Mantelfläche von der Verschleißschutzschicht gebildet sein kann. Um solche Sacklöcher zu verschließen und damit während des Pflügens wenig Angriffsfläche für einen Abrieb der Verschleißschutzschicht zu bieten, können Stöpsel aus dem elastisch verformbaren Material in diese Sacklöcher eingeführt werden, um diese vollständig zu verschließen. Nach außen hin wirkt die Oberfläche der Verschleißschutzschicht dann im Wesentlichen durchgehend oder glatt. Mittels Klebens, Vulkanisierens, Einsatzes eines Vulkanisationsklebers, etc., können Stöpsel und Verschleißschutzschicht (die aus demselben Material sein können) dann zu einer einstückigen Struktur verbunden werden. Alternativ ist es auch möglich, das Streichblech ohne jegliche Schrauben vorzusehen (zum Beispiel DuraMax-Technik der Firma Lemken).

Mit einem erfindungsgemäßen Streichblech kann ein sehr geringer Abrieb pro Hektar bearbeiteten Landes erreicht werden. Indem bloßes Sandstrahlen, Grundieren, Aufbringen von Kleber und Befestigen eines Gummilappens an einem Streichblechgrundmaterial ausreichend ist, das erfindungsgemäße Streichblech herzustellen, kann dieses kostengünstig sogar durch einen Laien erfolgen, wobei nach einer Abnutzung des Gummis der dann freigelegte Stahlkörper wieder mehrfach neu mit Gummimaterial beschichtet werden kann. Ein weiterer erfindungsgemäß erreichbarer Vorteil besteht darin, dass es nicht mehr unbedingt erforderlich ist, qualitativ sehr hochwertige Stähle zu verwenden, da diese nun mehr lediglich als Trägermaterial dienen. Zusätzlich kann erfindungsgemäß mit einer niedrigeren Materialstärke des Streichblechgrundmaterials gearbeitet werden, was zu einer höheren Wirtschaftlichkeit des Pfluggerätes führt.

### Kurze Beschreibung der Figuren:

Im Folgenden werden exemplarische Ausführungsbeispiele der vorliegenden Erfindung mit Verweis auf die folgenden Figuren detailliert beschrieben.
Fig.1 zeigt einen herkömmlichen Pflugkörper mit Streichblech.
Fig.2 zeigt einen Pflugkörper mit Streichblech mit Verschleißschutzbeschichtung in Draufsicht gemäß einem Ausführungsbeispiel der Erfindung.
Fig.3 zeigt einen Pflugkörper mit Streichblech mit Verschleißschutzbeschichtung im Schnitt gemäß einem Ausführungsbeispiel der Erfindung.
Fig.4 zeigt ein Streichblech mit Verschleißschutzbeschichtung in Draufsicht auf die Rückseite gemäß einem Ausführungsbeispiel der Erfindung.
Fig.5 bis Fig.8 zeigen Pflugkörper mit Streichblech gemäß anderen exemplarischen Ausführungsbeispielen der Erfindung.
Fig.9 bis Fig.13 zeigen Schnittansichten entlang einer Linie B-B des Streichblatts gemäß Fig.7 in unterschiedlichen Konfigurationen hinsichtlich der Bedeckung eines Streichblechgrundkörpers mit einem Verschleißschutzmaterial.
Fig.14 bis Fig.18 zeigen Schnittansichten entlang einer Linie C-C des Streichblatts gemäß Fig.8 in unterschiedlichen Konfigurationen hinsichtlich der Bedeckung eines Streichblechgrundkörpers mit einem Verschleißschutzmaterial.
Fig.19 und Fig.20 zeigen Pflugkörper mit Streichblech gemäß anderen exemplarischen Ausführungsbeispielen der Erfindung.
Fig.21 bis Fig.25 zeigen Schnittansichten entlang einer Linie D-D des Streichblatts gemäß Fig.19 in unterschiedlichen Konfigurationen hinsichtlich der Bedeckung eines Streichblechgrundkörpers mit einem Verschleißschutzmaterial.
Fig.26 bis Fig.30 zeigen Schnittansichten entlang einer Linie E-E des Streichblatts gemäß Fig.20 in unterschiedlichen Konfigurationen hinsichtlich der Bedeckung eines Streichblechgrundkörpers mit einem Verschleißschutzmaterial.
Fig. 31 zeigt ein Blockdiagramm, das ein Verfahren gemäß einem exemplarischen Ausführungsbeispiel der Erfindung zum Beschichten eines Streichblechs für einen Pflugkörper veranschaulicht.
Fig. 32 zeigt ein Blockdiagramm, das ein Verfahren gemäß einem anderen exemplarischen Ausführungsbeispiel der Erfindung zum Beschichten eines Streichblechs für einen Pflugkörper veranschaulicht.
Fig. 33 zeigt eine Querschnittansicht eines Streichblechs gemäß einem exemplarischen Ausführungsbeispiel der Erfindung, bei dem eine Verschleißschutzschicht frei von Bohrungen zum Aufnehmen von Befestigungsschrauben ist.
Fig. 34 zeigt eine Draufsicht einer Befestigungsstruktur des Streichblechs gemäß Fig. 33 zum Befestigen an einem Pfluggrundkörper.

### Ausführliche Beschreibung der Figuren:

Die Darstellungen in den Figuren sind schematisch und nicht maßstäblich.

Gleiche oder ähnliche Komponenten in unterschiedlichen Figuren sind mit gleichen Bezugsziffern versehen.

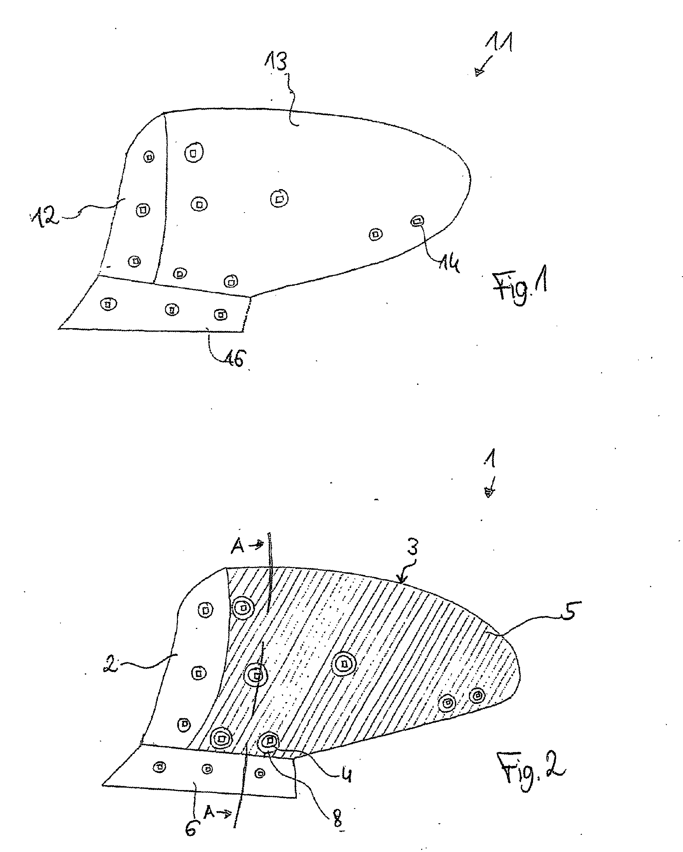

Ein herkömmlicher Pflugkörper gemäß Fig.1 ist allgemein mit 11 bezeichnet und besteht aus einem Streichblech 13, einer Streichblechkante 12 und einem Schar 16.

Das Streichblech 13 ist über Schraubenverbindungen 14 an dem Pfluggrundkörper, der hier nicht dargestellt ist, lösbar befestigt. Dadurch kann bei einem Verschleiß das Streichblech 13 mittels Lösens der Schraubenverbindungen 14 ausgewechselt werden.

Ein Pflugkörper gemäß einem Ausführungsbeispiel der Erfindung ist in Fig.2 ist mit 1 bezeichnet und weist ein Streichblech 3, eine Streichblechkante 2 und ein Schar 6 auf. Das Streichblech 3 ist über Schraubenverbindungen 4 an einem nicht gezeigten Pfluggrundkörper befestigt.

Es kann bei einem Verschleiß einer aus einem Gummimaterial hergestellten Verschleißschutzschicht 5 letztere ausgewechselt werden. Damit die Befestigungsschrauben 4 mit dem Streichblech 3 eine ebene und plane Arbeitsfläche bilden, kann die Verschleißschutzschicht 5 im Bereich der Befestigung lokal leicht ausgespart (hier mit 8 bezeichnet) werden. Wie aus Fig.2 ersichtlich, ist das dem Verschleiß besonders unterworfene Teil, das Streichblech 3, mit der Verschleißschutzschicht (schraffiert mit 5 bezeichnet) beschichtet.

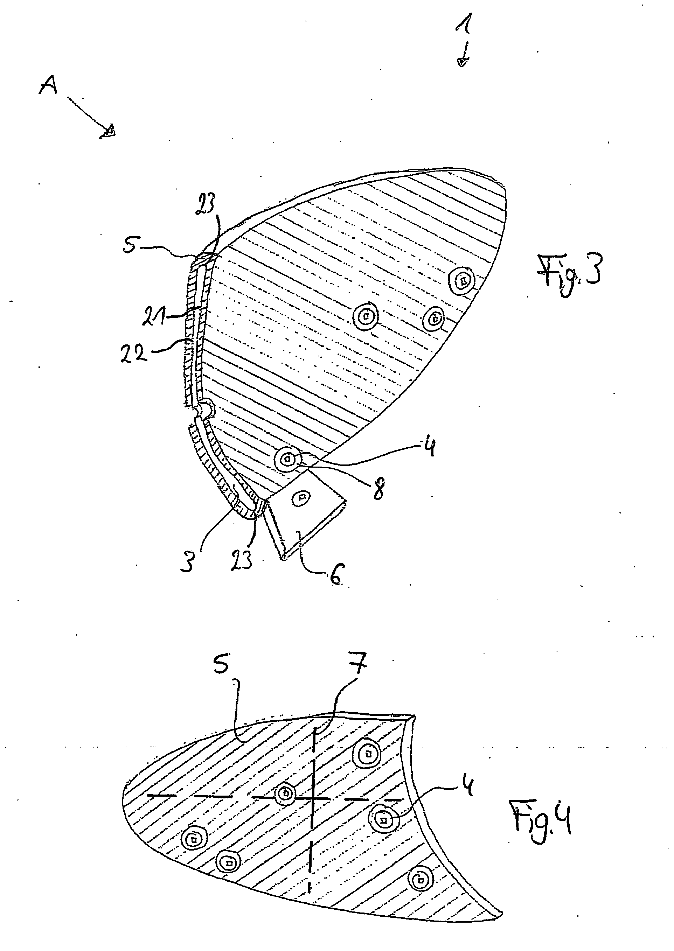

Fig.3 zeigt einen Schnitt entlang einer in Fig.2 mit A-A angedeuteten Schnittlinie. Die Verschleißschutzschicht 5 umschließt das Streichblech 3 komplett.

Die Streichblechkante 2 sowie die Schar 6 werden zweckmäßig mittels Scheiben oder anderen Materialien oder Bauteilen so unterlegt, dass keine Stufe zwischen ihr und dem Streichblech 3 mit Verschleißschutz 5 verbleibt, um somit die gewünschte plane und durchgehende Arbeitsfläche zu gewährleisten.

Aus Fig.4 wird ersichtlich, wie das Verschleißschutzmaterial 5 über den Streichblechgrundkörper 3 gezogen werden kann. Dabei bleiben auf der Rückseite des mit dem Verschleißschutz 5 beschichtetem Streichblechgrundkörpers 5 die Einführungsschlitze (hier gestrichelt mit 7 bezeichnet) vorhanden, Bezugszeichen 7 zeigt hier einen möglichen Verlauf der vorher beschriebenen Einführungsschlitze. Bei einem Sprühverfahren zum Bilden der Verschleißschutzschicht 5 entfallen die Einführungsschlitze 7, da das Verschleißschutzmaterial 5 dann in flüssiger Form aufgesprüht wird und somit den Streichblechgrundkörper 3 nahtlos umhüllt.

Das Streichblech aus Fig.2 bis Fig.4 hat eine 8 mm dicke Gummischicht 5, die auf eine zuvor sandgestrahlte und mit einem Klebstoff versehene vollständige Oberfläche des aus Stahl hergestellten Streichblechgrundmaterials 3 aufgebracht ist. Mit anderen Worten sind, wie in Fig.3 gezeigt, eine erste Hauptoberfläche 21, eine im Wesentlichen parallel gegenüberliegende zweite Hauptoberfläche 22 sowie eine ringförmig umlaufende Schmalfläche 23 des Streichblechgrundmaterials 3 mit dem Gummimaterial 5 bedeckt. Die Verschleißschutzschicht 5 ist wie das Streichblechgrundmaterial 3 von Befestigungsschrauben 4 durchsetzt, wobei in der Verschleißschutzschicht 5 kleine Freiräume 8 zwischen einer jeweiligen Befestigungsschraube 4 und dem Gummimaterial der Verschleißschutzschicht 5 erbleibt.

In dem Ausführungsbeispiel von Fig.2 bis Fig.4 ist das Streichblechgrundmaterial 3 als eine durchgehende, gekrümmte Schicht vorgesehen, so dass ein geschlossenes Streichblech gebildet ist. Fig.2 und Fig.3 zeigen, dass sowohl die Streichblechkante 2 als auch das Schar 6 von einer Bedeckung mit der Gummischicht 5 frei sind, das heißt als unbedeckte Stahlkomponenten gebildet sind.

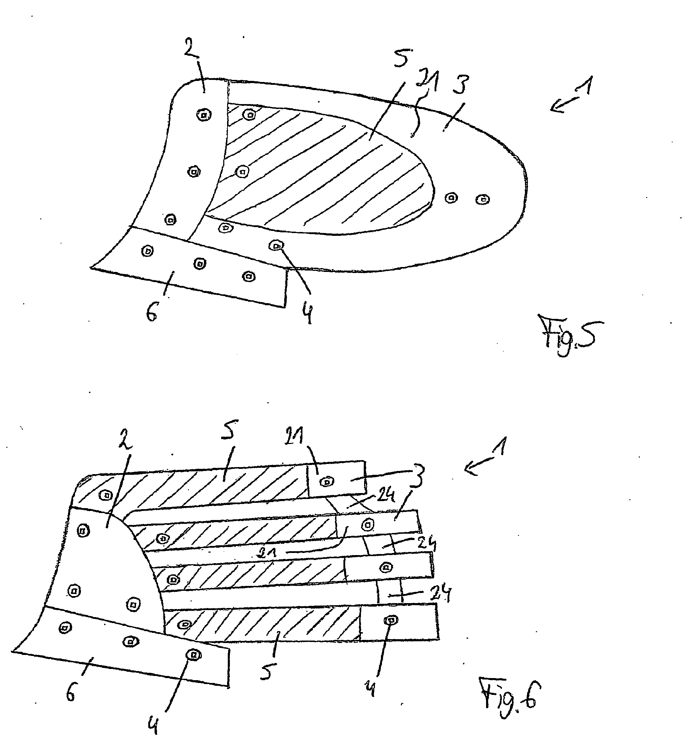

Fig.5 zeigt einen anderen Pflugkörper 1, bei dem nur ein besonders verschleißanfälliger Oberflächenbereich einer der beiden Hauptoberflächen 21 des Streichblechgrundmaterials 3 mit einer Verschleißschutzschicht 5 aus Gummi versehen ist. Der vorliegende Erfinder hat überraschenderweise herausgefunden, dass die mechanische Beanspruchung des Streichblechs vorwiegend in diesem zentralen, randfernen Oberflächenbereich des Streichblechs auftritt, so dass ein im Wesentlichen U-förmiger kantennaher Randbereich des Streichblechgrundmaterials 3 zwecks Einsparung von Material nicht mit der Gummischicht 5 bedeckt ist.

Ein anderes Ausführungsbeispiel eines Pflugkörpers 1 gemäß Fig.6 zeigt, dass das Streichblechmaterial 3 hier als vier (oder mehr oder weniger) voneinander beabstandete Stahlstreifen gebildet sind, womit sowohl Stahl- als auch Gummi-Material eingespart werden kann. Jeweils benachbarte Stahlstreifen sind mittels eines Verbindungselements 24 miteinander verbunden, insbesondere miteinander verschraubt. Hierfür dienen Schrauben 4, welche eine Verbindung von Streifen 3 und Verbindungselementen 24 herstellen. Ein Abschnitt einer Hauptoberfläche 21 der Streifen 3 ist mit einem Gummimaterial 5 bedeckt, wohingegen Endabschnitte der Hauptoberfläche 21 der Streifen 3 von einer solchen Gummibedeckung 5 frei sind. Dadurch kann wiederum Gummimaterial eingespart werden. Der gummibedeckte Abschnitt der Streifen 3 kann bei einem Pflügen einer besonders starken mechanischen Beanspruchung ausgesetzt sein. Bei einer streifenartigen Konfiguration gemäß

Fig. 6 kann bei Verschleiß eines bestimmten Streifens 3 dieser unabhängig von den anderen Streifen 3 ausgetauscht werden oder mit einer neuen Gummischicht 5 bedeckt werden, so dass die Kosten zum Austauschen speziell auf den verschlissenen Teil beschränkt und somit reduziert werden können.

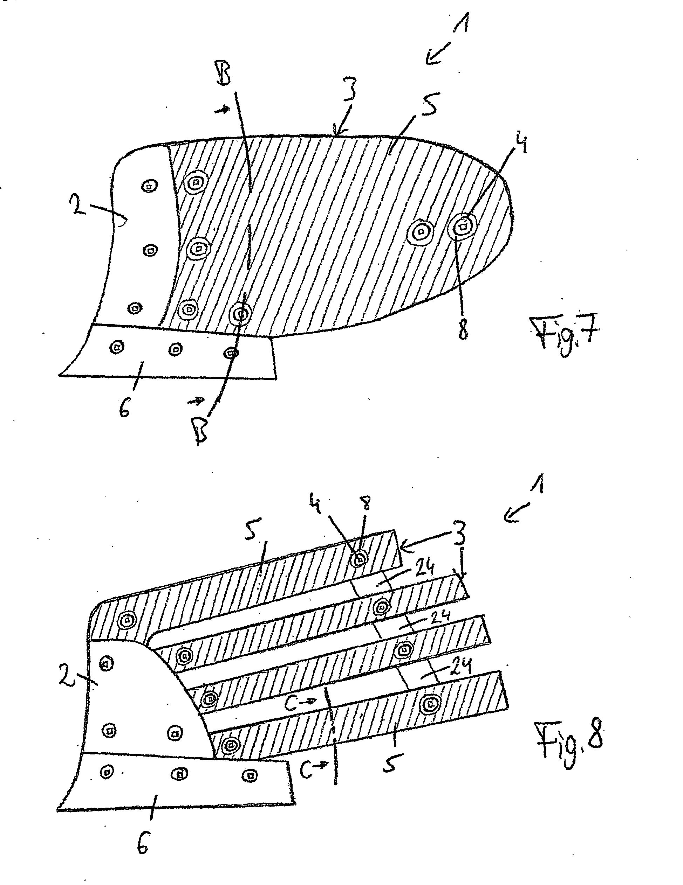

Fig.7 zeigt ein Ausführungsbeispiel eines Pflugkörpers 1 ähnlich Fig.5, bei dem jedoch eine gesamte Hauptoberfläche 21 des Streichblechgrundmaterials 3 mit einer Gummischicht 5 bedeckt ist.

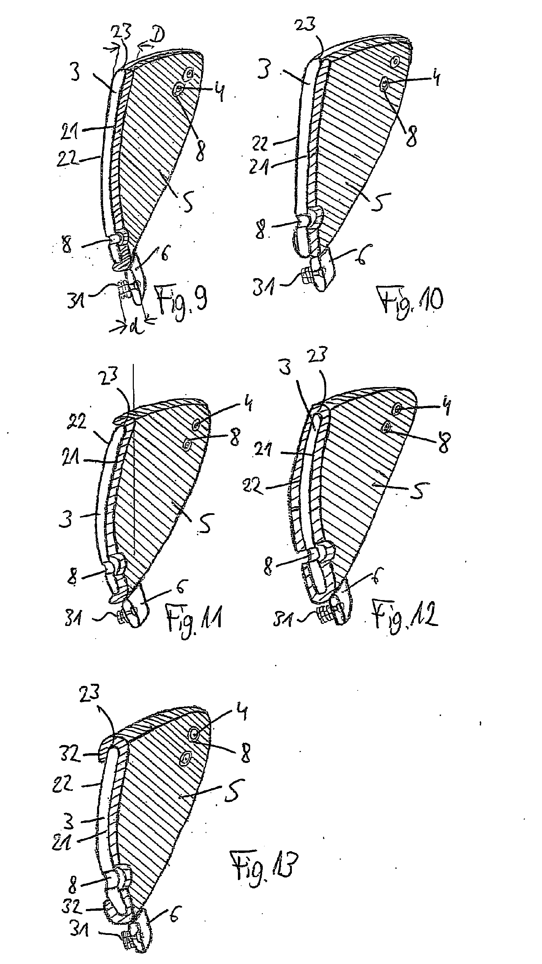

Fig.7 zeigt ein Ausführungsbeispiel ähnlich Fig.2. Fig.9 bis Fig.13 beziehen sich auf die Konfiguration von Fig.7 und zeigen Querschnitte entlang einer Linie B-B, welche unterschiedlichen Ausführungsvarianten entsprechen.

Gemäß Fig.9 ist die konkave Hauptoberfläche 21 des Streichblechgrundmaterials 3 mit der Gummischicht 5 bedeckt, wohingegen die konvexe Hauptoberfläche 22 des Streichblechgrundmaterials 3 von der Gummischicht 5 frei ist. Eine umlaufende Schmalseite 23 ist von der Gummischicht 5 teilweise frei (oberer Abschnitt gemäß Fig. 9) und teilweise bedeckt (unterer Abschnitt gemäß Fig. 9). Wie in Fig. 9 ferner gezeigt, ist Schar 6 mit Unterlegscheiben 31 so unterlegt, dass Schar 6 und Streichblech 3 eine plane und durchgehende Arbeitsfläche bereitstellen. Eine gemeinsame Dicke D von Streichblechgrundmaterial 3 und Verschleißschutzschicht 5 kann im Wesentlichen gleich einer gemeinsamen Dicke d von Unterlegscheiben 31 und Schar 6 sein. Die Unterlegscheiben 31 können auch durch eine Spiralfeder entsprechender Dicke oder Ähnliches ersetzt werden, welche neben der Beabstandungsfunktion auch eine Federungsfunktion aufweisen können, welche der elastischen Deformierbarkeit der Gummischicht 5 entspricht.

Fig.10 unterscheidet sich von dem Ausführungsbeispiel gemäß Fig.9 im Wesentlichen dadurch, dass gemäß Fig.10 der untere Endbereich der Schmalkante 23 ebenfalls frei von Gummi 5 ist, so dass hier nur die vordere Hauptoberfläche 21 mit Gummimaterial 5 bedeckt ist.

Fit.11 unterscheidet sich von Fig.9 im Wesentlichen dadurch, dass der Schmalseitenbereich 23 hier vollumfänglich (also auch in einem oberen Bereich) mit Gummimaterial 5 bedeckt.

Fig.12 unterscheidet sich von Fig.11 im Wesentlichen dadurch, dass sowohl beide Hauptoberflächen 21 und 22 als auch der gesamte Schmalseitenbereich 23 durchgehend mit Gummimaterial bedeckt sind. Somit ist im Wesentlichen die gesamte Oberfläche des Streichblechgrundmaterials 3 mit dem Gummimaterial 5 bedeckt, mit Ausnahme von den Umgebungsbereichen 8 der Verbindungsschrauben 4.

Schließlich ist in Fig.13 ein Ausführungsbeispiel gezeigt, bei dem die vordere Hauptoberfläche 21, der vollumlaufende Schmalseitenbereich 23, sowie ein äußerer, im Wesentlichen ringförmiger Randbereich der hinteren Hauptoberfläche 22 mit dem Gummimaterial 5 bedeckt ist. Mit anderen Worten ist ein Gummilappen auf die vordere Hauptoberfläche 21 aufgesetzt, um die Kanten 23 gelegt und bis in einen Randbereich der hinteren Hauptoberfläche 22 hin umgelegt, um Überlappungsbereiche 32 zu bilden.

Fig.8 zeigt ein Ausführungsbeispiel eines Pflugkörpers 1 ähnlich Fig.6, bei dem jedoch eine gesamte Hauptoberfläche 21 des Streichblechgrundmaterials 3 mit einer Gummischicht 5 bedeckt ist.

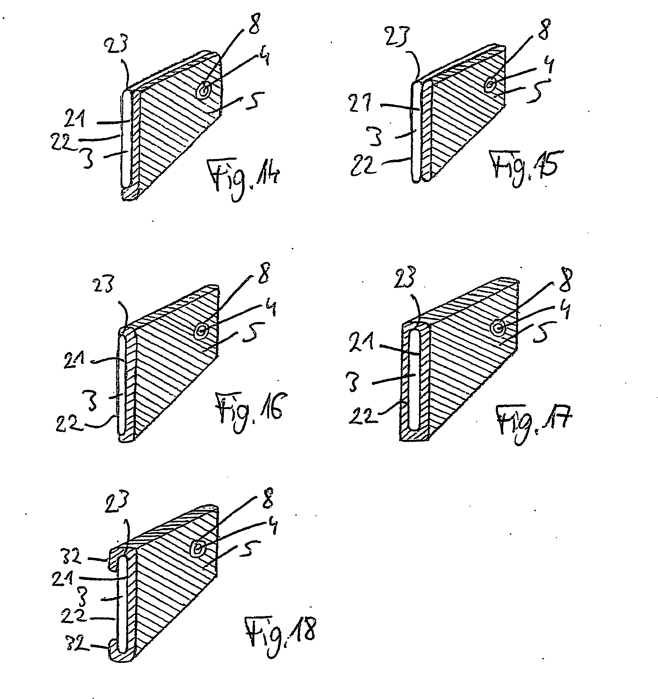

Fig.14 bis Fig.18 beziehen sich auf die Konfiguration von Fig.8 und zeigen Querschnitte entlang einer Linie C-C, welche unterschiedlichen Ausführungsvarianten in der offenen Streichblattkonfiguration entsprechen.

Fig.14 entspricht hinsichtlich der Bedeckung des Streichblechgrundmaterials 3 mit der Verschleißschutzschicht 5 der Konfiguration von Fig.9, Fig.15 entspricht Fig.10, Fig.16 entspricht Fig.11, Fig.17 entspricht Fig.12 und Fig.18 entspricht Fig.13.

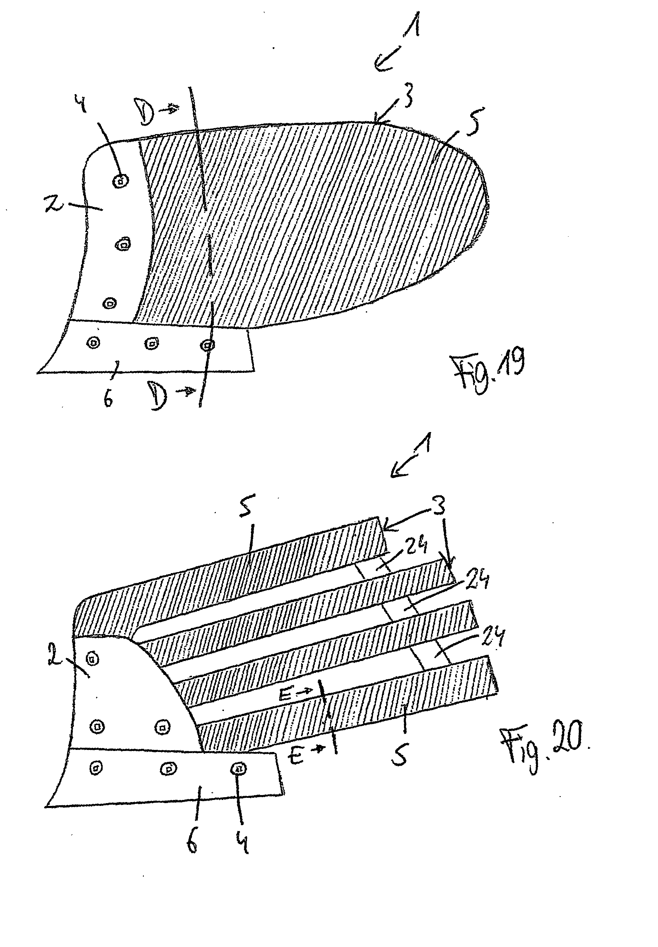

Die Ausführungsbeispiele von Fig.19 und Fig.20 entsprechen im Wesentlichen Fig.7 bzw. 8, wobei bei den Pflugkörpern 1 von Fig.19 und Fig.20 die Verschleißschutzschicht 5 vollständig frei von Durchgangslöchern für Durchgangsschrauben sind. Die Befestigungsschrauben wurden vor der Beschichtung bereits vormoniert (oder die DuraMax-Technik der Firma Lemken wird angewendet, so dass dann Schrauben entfallen).

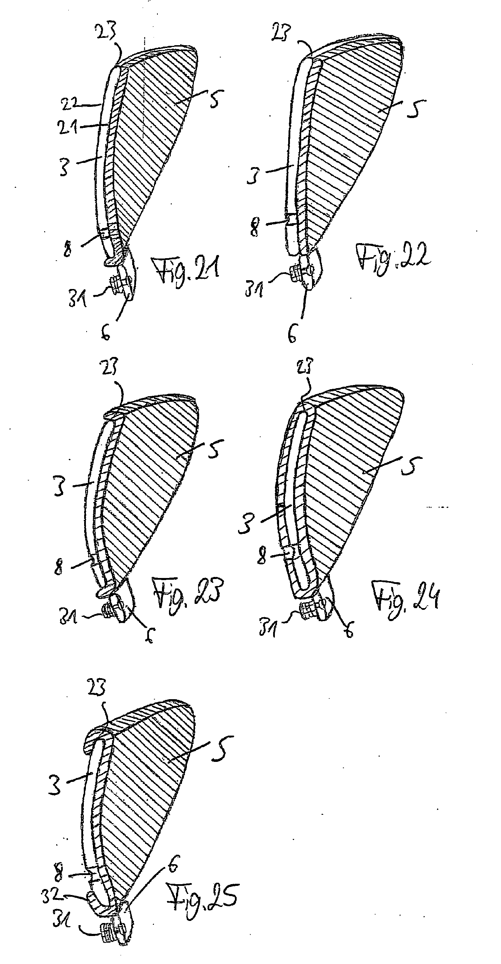

Fig.21 bis Fig.25 zeigen hierbei Querschnitte entlang einer Linie D-D aus Fig.19, welche den Querschnittsansichten von Fig.9 bis Fig.13 entsprechen, so dass diesbezüglich auf obige Ausführungen verwiesen wird.

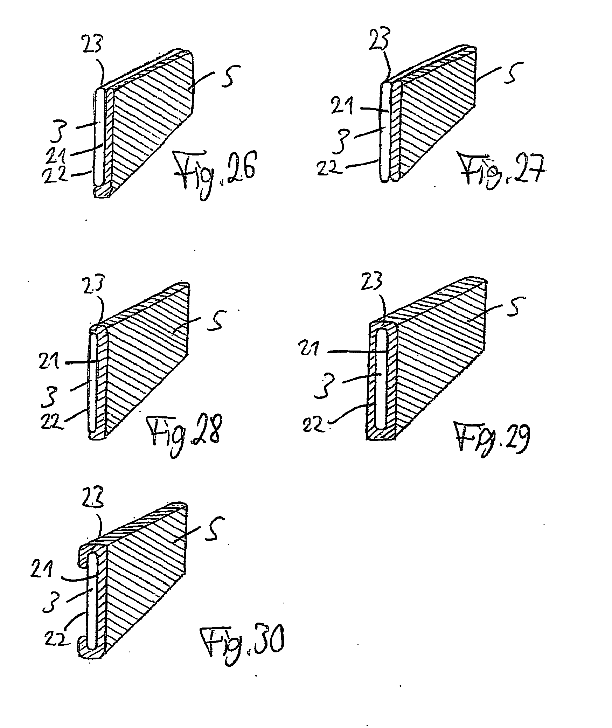

Fig.26 bis Fig.30 zeigen Querschnitte entlang einer Linie E-E aus Fig.20, welche den Querschnittsansichten von Fig.14 bis Fig.18 entsprechen, so dass diesbezüglich auf obige Ausführungen verwiesen wird.

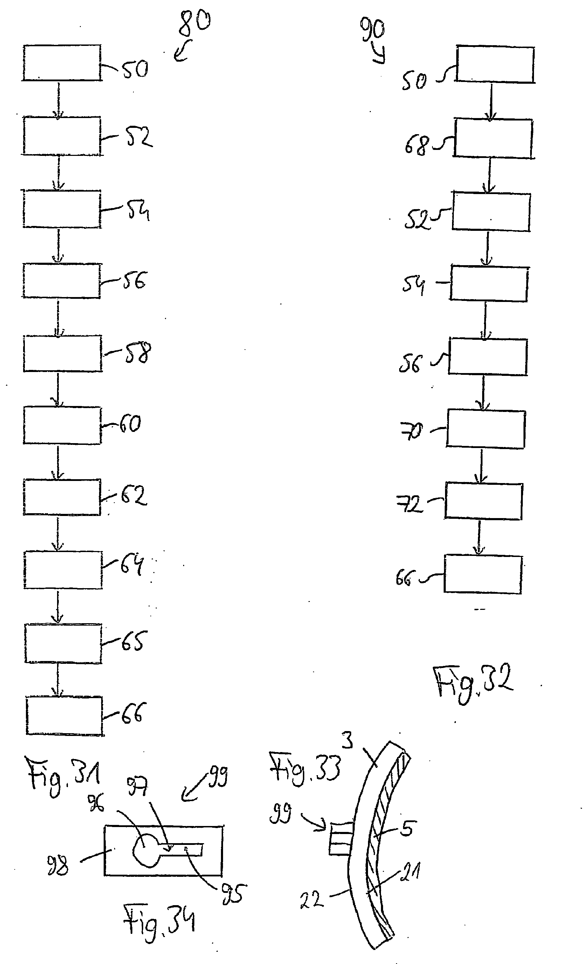

Fig.31 zeigt ein Blockdiagramm 80, welches ein Verfahren zum Herstellen oder zum Überholen eines Streichblechs für einen Pflugkörper gemäß einem exemplarischen Ausführungsbeispiel der Erfindung zeigt.

In einem Block 50 wird ein Streichblechgrundmaterial aus Stahl bereitgestellt, oder von einem Pflugkörper abmontiert, um letzteres zu erneuern.

In einem Schritt 52 wird das (ggf. von Gummiresten einer ehemaligen Verschleißschutzschicht befreite) Streichblechgrundmaterial mittels Sandstrahlens behandelt, um die Oberfläche zu reinigen und für die nachfolgenden Prozesse aufzurauen.

In einem nachfolgenden Schritt 54 wird das Streichblechgrundmaterial grundiert, bevor in einem Schritt 56 Klebstoff zum Klebebefestigen eines Gummilappens aufgebracht wird. Hier können die Befestigungsschrauben vor Beschichtung vormontiert werden, dann entfällt später das Fräsen der Löcher (nachfolgende Schritte 60 bis 65 entfallen dann).

In einem Schritt 58 wird eine Verschleißschutzschicht aus Gummi auf eine Hauptoberfläche des vorbehandelten Streichblechgrundmaterials aufgelegt und optional um dessen Schmalkanten umgelegt.

In einem Schritt 60 können Löcher in die Verschleißschutzschicht gefräst werden, bevor in einem Schritt 62 Verbindungsschrauben durch diese Löcher hindurchgeführt werden können.

In einem Schritt 64 können verbleibende Blindlöcher mit einem Gummistöpsel verschlossen werden, und in einem Schritt 65 können diese Gummistöpsel mittels Vulkanisierens in die Verschleißschutzschicht integriert werden.

In einem Schritt 66 kann das so hergestellte oder wiederaufbereitete Streichblech an einem Pflugkörper montiert werden.

Fig.32 zeigt ein Blockdiagramm 90 gemäß einem Verfahren zum Herstellen oder Wiederaufbereiten eines Streichblechs für einen Pflugkörper gemäß einem anderen exemplarischen Ausführungsbeispiel.

Nach dem Bereitstellen eines Streichblechgrundmaterials in Schritt 50 werden in einem Schritt 68 Löcher durch das Streichblechgrundmaterial gebohrt, falls dieses noch nicht ggf. erforderliche Löcher aufweist. Schritte 52, 54 und 56 verlaufen wie gemäß Fig.31. In einem nachfolgenden Schritt 70 wird dann ein unvulkanisiertes Gummimaterial auf eine zu beschichtende Hauptoberfläche des vorbereiteten Streichblechgrundmaterials aufgezogen und in einem nachfolgenden Vulkanisierungsschritt 72 in einem bereits auf dem Streichblechgrundmaterial aufgebrachten Zustand vulkanisiert. Das Verfahren kann in Schritt 66 dann ein Montieren des Streichblechs an einem Pfluggrundkörper aufweisen.

Fig.33 zeigt eine Querschnittansicht eines Streichblechs gemäß einem exemplarischen Ausführungsbeispiel der Erfindung, bei dem eine Verschleißschutzschicht 5 frei von Bohrungen zum Aufnehmen von Befestigungsschrauben ist.

Fig. 34 zeigt eine Draufsicht einer Befestigungsstruktur 99 des Streichblechs gemäß Fig. 33 zum Befestigen an einem Pfluggrundkörper (nicht gezeigt).

Das Streichblechgrundmaterial 3 weist an einer Hauptoberfläche 22, welche einer mit der Verschleißschutzschicht 5 bedeckten anderen Hauptoberfläche 21 des Streichblechgrundmaterials 3 gegenüberliegt, die Befestigungsstruktur 99 zum Befestigen des Streichblechs an dem Pfluggrundkörper auf. Streichblechgrundmaterial 3 und Befestigungsstruktur 99 können miteinander zum Beispiel verschweißt oder verlötet sein.

Wie Fig.34 zu entnehmen ist, enthält die Befestigungsstruktur 99 eine metallische Trägerstruktur 98, in die eine schlüssellochförmige Aussparung 97 eingebracht ist. Ein kreisförmiger Abschnitt 96 dient zum Einführen eines nicht gezeigten Schraubenkopfs zum Befestigen an einem nicht gezeigten Pfluggrundkörper. Mittels Vorschiebens der Schraube entlang eines Langlochs 95 kann die Schraube in der Befestigungsstruktur 99 verankert werden. Natürlich sind eine Vielzahl unterschiedlicher Befestigungsstrukturen möglich, die an dem Streichblech befestigt werden können.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Streichblech für einen Pflugkörper, wobei das Streichblech aufweist:
ein Streichblechgrundmaterial;
eine Verschleißschutzschicht, die zumindest einen Teil einer Oberfläche des Streichblechgrundmaterials bedeckt und ein gummielastisches Material als elastisch verformbares Material aufweist.

2. Streichblech nach Anspruch 1, wobei das gummielastische Material zumindest ein Material aus der Gruppe aufweist, die Gummi, natürliches Gummi, synthetisches Gummi, ein Elastomer und Kautschukmischungen aufweist.

3. Streichblech nach Anspruch 1 oder 2, wobei die Verschleißschutzschicht von Befestigungsschrauben durchsetzt ist und im Bereich der Befestigungsschrauben so ausgespart ist, dass die Befestigungsschrauben zusammen mit der Verschleißschutzschicht eine ebene und plane Arbeitsfläche bilden.

4. Streichblech nach einem der Ansprüche 1 bis 3, aufweisend zumindest eines der folgenden Merkmale:
die gesamte Oberfläche des Streichblechgrundmaterials ist mit der Verschleißschutzschicht bedeckt;
eine der Hauptoberflächen des Streichblechgrundmaterials ist mit der Verschleißschutzschicht bedeckt und die andere der beiden Hauptoberflächen des Streichblechgrundmaterials ist von der Verschleißschutzschicht frei;
eine der Hauptoberflächen des Streichblechgrundmaterials ist mit der Verschleißschutzschicht bedeckt, die andere der Hauptoberflächen des Streichblechgrundmaterials ist von der Verschleißschutzschicht frei und eine oder mehrere der Schmalseiten des Streichblechgrundmaterials ist oder sind mit der Verschleißschutzschicht bedeckt;
eine der Hauptoberflächen des Streichblechgrundmaterials ist mit der Verschleißschutzschicht bedeckt, ein Teil der anderen der Hauptoberflächen des Streichblechgrundmaterials ist von der Verschleißschutzschicht frei, zumindest eine der Schmalseiten des Streichblechgrundmaterials ist mit der Verschleißschutzschicht bedeckt und die Verschleißschutzschicht überlappt bis in die andere Hauptoberfläche hinein.

5. Streichblech nach einem der Ansprüche 1 bis 4,
wobei das Streichblechgrundmaterial an einer Hauptoberfläche, welche einer mit der Verschleißschutzschicht bedeckten anderen Hauptoberfläche des Streichblechgrundmaterials gegenüberliegt, eine Befestigungsstruktur zum Befestigen des Streichblechs an einem Pfluggrundkörper aufweist.

6. Pflugkörper, aufweisend ein Streichblech nach einem der Ansprüche 1 bis 5.

7. Pflugkörper nach Anspruch 6, aufweisend eine Streichblechkante und eine Schar, wobei die Streichblechkante und/oder die Schar mittels einer oder mehrerer Scheiben so unterlegt ist oder sind, dass zwischen Streichblechkante und/oder Schar einerseits und dem Streichblech mit der Verschleißschutzschicht andererseits eine Kante vermieden ist, um somit eine plane und durchgehende Arbeitsfläche zu gewährleisten.

8. Pflugkörper nach Anspruch 7, wobei eine Dicke der einen oder mehreren Scheiben gleich einer Dicke der Verschleißschutzschicht ist.

9. Pflugkörper nach einem der Ansprüche 6 bis 8, aufweisend eine Streichblechkante und eine Schar, wobei die Streichblechkante und/oder die Schar von der Verschleißschutzschicht frei ist oder sind.

10. Verfahren zum Beschichten eines Streichblechs für einen Pflugkörper, wobei das Verfahren aufweist:
Bereitstellen eines Streichblechgrundmaterials;
Bilden einer Verschleißschutzschicht auf dem Streichblechgrundmaterial mittels Beschichtens zumindest einen Teils einer Oberfläche des Streichblechgrundmaterials mit einem gummielastischen Material als elastisch verformbares Material.

11. Verfahren nach Anspruch 10, wobei eine Verbindung der zuvor erzeugten, dimensionierten und vulkanisierten Verschleißschutzschicht mit dem Streichblechgrundmaterial mittels einer Klebeverbindung erfolgt.

12. Verfahren nach Anspruch 10, wobei noch unvulkanisiertes Material für die Verschleißschutzschicht auf das mit einem Kleber versehene Streichblechgrundmaterial aufgebracht und anschließend vulkanisiert wird.

13. Verfahren nach Anspruch 10, wobei das Verschleißschutzmaterial mittels eines Sprühverfahrens auf das Streichblechgrundmaterial aufgebracht wird.

14. Verfahren nach einem der Ansprüche 10 bis 13, wobei vor dem Bilden der Verschleißschutzschicht in dem Streichblechgrundmaterial Schraubenlöcher gebildet werden oder Schraubenlöcher bereits vorhanden sind und Befestigungsschrauben durch die Schraubenlöcher hindurchgeführt werden.

15. Verfahren nach einem der Ansprüche 10 bis 14, wobei nach dem Bilden der Verschleißschutzschicht in dem Streichblechgrundmaterial und/oder in der Verschleißschutzschicht Schraubenlöcher gebildet werden, Befestigungsschrauben durch die Schraubenlöcher hindurchgeführt werden und Stöpsel aus elastisch verformbarem Material zum Bedecken der Befestigungsschrauben auf die Schraubenlöcher aufgesetzt werden.

## Claims

1. Moldboard for a plough body, wherein the moldboard comprises:
a moldboard base material;
a wear protection layer which covers at least a part of the surface of the moldboard base material and which comprises a rubber elastic material as a flexible deformable material.

2. Moldboard according to claim 1, wherein the rubber elastic material comprises at least one material taken from the group which comprises rubber, natural rubber, synthetic rubber, an elastomer and natural rubber mixtures.

3. Moldboard according to claim 1 or 2, wherein the wear protection layer is perforated by fixing screws and is recessed in the region of the fixing screws in such a manner that the fixing screws together with the wear protection layer form a planar and flat working surface.

4. Moldboard according to one of the claims 1 to 3, comprising at least one of the following features:
the whole surface of the moldboard base material is covered by the wear protection layer;
one of the main surfaces of the moldboard base material is covered by the wear protection layer and the other one of the two mains surfaces of the moldboard base material is free from the wear protection layer;
one of the main surfaces of the moldboard base material is covered by the wear protection layer, the other one of the main surfaces of the moldboard base material is free from the wear protection layer and one or more of the narrow sides of the moldboard base material is or are covered by the wear protection layer;
one of the main surfaces of the moldboard base material is covered by the wear protection layer, a part of the other ones of the main surfaces of the moldboard base material is free from the wear protection layer, at least one of the narrow sides of the moldboard base material is covered by the wear protection layer and the wear protection layer overlaps into the other main surface.

5. Moldboard according to one of the claims 1 to 4, wherein the moldboard base material comprises at one main surface which is located opposite with respect to another main surface of the moldboard base material, which main surface is covered by the wear protection layer, an attachment structure for attaching the moldboard at a plough base body.

6. Plough body comprising a moldboard according to one of the claims 1 to 5.

7. Plough body according to claim 6, comprising a moldboard edge and a share, wherein the moldboard edge and/or the share is or are laid underneath by means of one or more discs in such a manner that in between the moldboard edge and/or the share on the one hand and the moldboard with the wear protection layer on the other hand an edge is avoided in order to allow for a planar and continuous working surface.

8. Plough body according to claim 7, wherein the thickness of the one or more discs is equal to the thickness of the wear protection layer.

9. Plough body according to one of the claims 6 to 8, comprising a moldboard edge and a share, wherein the moldboard edge and/or the share is or are free from the wear protection layer.

10. Method for coating a moldboard for a plough body, wherein the method comprises:
providing a moldboard base material;
forming a wear protection layer on the moldboard base material by means of coating at least a part of a surface of the moldboard base material with a rubber elastic material as elastic deformable material.

11. Method according to claim 10, wherein a connection of the afore formed dimensioned and vulcanized wear protection layer with the moldboard base material is effected by a glued connection.

12. Method according to claim 10, wherein still unvulcanized material for the wear protection layer is applied onto the moldboard base material being provided with glue, and becomes vulcanized afterwards.

13. Method according to claim 10, wherein the wear protection layer is put on the moldboard base material by means of a spray method.

14. Method according to one of the claims 10 to 13, wherein before forming the wear protection layer within the moldboard base material screw holes are formed or are already existent and fixing screws are put through the screw holes.

15. Method according to one of the claims 10 to 14, wherein after forming the wear protection layer screw holes are formed in the moldboard base material and/or in the wear protection layer,
fixing screws are put through the screw holes and
plugs made from an elastic deformable material are fitted on the screw holes in order to cover the fixing screws.

## Revendications

1. Versoir pour un corps de charrue, sachant que le versoir présente :
un matériau de base pour le versoir ;
une couche de protection contre l'usure, qui recouvre au moins une partie d'une surface du matériau de base du versoir et qui présente comme matériau élastiquement déformable un matériau élastique.

2. Versoir selon la revendication 1, sachant que le matériau élastique présente au moins un matériau choisi parmi le groupe comportant de la gomme, de la gomme naturelle, de la gomme de synthèse, un élastomère et des mélanges de caoutchouc.

3. Versoir selon la revendication 1 ou 2, sachant que la couche de protection contre l'usure est traversée par des vis de fixation et est évidée dans la zone des vis de fixation de telle manière que les vis de fixation forment conjointement avec la couche de protection contre l'usure une surface de travail plate et plane.

4. Versoir selon l'une quelconque des revendications 1 à 3, présentant au moins une des caractéristiques suivantes :
la surface totale du matériau de base du versoir est recouverte de la couche de protection contre l'usure ;
une des deux surfaces principales du matériau de base du versoir est recouverte de la couche de protection contre l'usure et l'autre surface principale du matériau de base du versoir est exempte de la couche de protection contre l'usure ;
une des surfaces principales du matériau de base du versoir est recouverte de la couche de protection contre l'usure, l'autre surface des surfaces principales du matériau de base du versoir est exempte de la couche de protection contre l'usure et un ou plusieurs parmi les côtés étroits du matériau de base du versoir est ou sont recouvert(s) de la couche de protection contre l'usure ;
une des surfaces principales du matériau de base du versoir est recouverte de la couche de protection contre l'usure, une partie de l'autre surface principale des surfaces principales du matériau de base du versoir est exempte de la couche de protection contre l'usure, au moins un des côtés étroits du matériau de base du versoir est recouvert de la couche de protection contre l'usure, et la couche de protection contre l'usure s'introduit jusqu'à l'autre surface principale par chevauchement.

5. Versoir selon l'une quelconque des revendications 1 à 4,
sachant que le matériau de base du versoir présente une structure de fixation servant à fixer le versoir à un corps de base de charrue au niveau d'une surface principale, laquelle fait face à une autre surface principale du matériau de base du versoir, recouverte de la couche de protection contre l'usure.

6. Corps de charrue, présentant un versoir selon l'une quelconque des revendications 1 à 5.

7. Corps de charrue selon la revendication 6, présentant une arête de versoir et un soc de charrue, sachant que l'arête du versoir et/ou le soc de charrue est calé(e)/sont calés au moyen d'un ou de plusieurs disques de telle manière qu'une arête est épargnée entre l'arête du versoir et/ou le soc de charrue d'un côté et le versoir doté de la couche de protection contre l'usure de l'autre côté afin de garantir ainsi une surface de travail plane et sans joints.

8. Corps de charrue selon la revendication 7, sachant qu'une épaisseur du disque ou de plusieurs disques est égale à une épaisseur de la couche de protection contre l'usure.

9. Corps de charrue selon l'une quelconque des revendications 6 à 8, présentant une arête de versoir et un soc de charrue, sachant que l'arête du versoir et/ou le soc de charrue est exempt(e) ou sont exempts de la couche de protection contre l'usure.

10. Procédé servant à enduire un versoir d'un corps de charrue, sachant que ledit procédé comprend les étapes suivantes consistant à :
fournir un matériau de base de versoir ;
former une couche de protection contre l'usure sur le matériau de base du versoir au moyen de l'enduction d'au moins une partie d'une surface du matériau de base du versoir avec comme matériau élastiquement déformable un matériau élastique.

11. Procédé selon la revendication 10, sachant qu'un assemblage de la couche de protection contre l'usure, produite au préalable, dimensionnée et vulcanisée, avec le matériau de base du versoir se produit au moyen d'un dispositif d'assemblage adhésif.

12. Procédé selon la revendication 10, sachant que le matériau encore non vulcanisé pour la couche de protection contre l'usure est appliqué sur le matériau de base du versoir pourvu d'un adhésif puis est vulcanisé.

13. Procédé selon la revendication 10, sachant que le matériau de protection contre l'usure est appliqué sur le matériau de base du versoir au moyen d'un procédé de flocage.

14. Procédé selon l'une quelconque des revendications 10 à 13, sachant que des trous pour vis sont formés avant la formation de la couche de protection contre l'usure, dans le matériau de base du versoir ou que des trous pour vis y sont déjà présents, et que des vis de fixation sont insérées dans les trous pour vis.

15. Procédé selon l'une quelconque des revendications 10 à 14, sachant que des trous pour vis sont formés après la formation de la couche de protection contre l'usure, dans ie matériau de base du versoir et/ou dans la couche de protection contre l'usure, que des vis de fixation sont insérées dans les trous pour vis et que des bouchons en un matériau élastiquement déformable servant à recouvrir les vis de fixation sont placés dans les trous de vis.
